# EUROPEAN PATENT SPECIFICATION

(11) **EP 3 400 397 B1**
(45) Date of publication and mention of the grant of the patent: **05.05.2021**
(21) Application number: 16809020.7
(22) Date of filing: 08.12.2016
(51) Int. Cl.: G06F 3/0488, F16H 59/08, B60K 35/00

(54) **TOUCHSHIFTER**
BERÜHRUNGSSCHIEBER
DISPOSITIF DE DÉCALAGE DE TOUCHE

(30) Priority: 05.01.2016 DE 102016200030
(43) Date of publication of application: 14.11.2018
(73) Proprietor: ZF Friedrichshafen AG, 88046 Friedrichshafen (DE)
(72) Inventor: FRIBUS, Vitali, 49610 Quakenbrück (DE); KIRCHHOFF, Johannes, 27243 Colnrade (DE); PETRZIK, Lenard, 49078 Osnabrück (DE)
(74) Representative: ZF Friedrichshafen AG
(86) International application number: PCT/EP2016/080201
(87) International publication number: WO 2017/118513

(56) References cited:
- DE-A1-102013 221 895
- JP-A- 2003 139 229
- US-A- 5 821 930
- US-A1- 2010 231 367
- US-A1- 2012 041 655

## Description

The invention relates to an operating device for a shift by wire assembly in an automobile comprising a touch sensitive display for selecting an operation mode of an automatic and/or automatized transmission of the automobile, wherein the touch sensitive display is configured to detect a touch gesture of an operator corresponding to the selection of the operation mode in a selection operating state of the touch sensitive display. Such operating devices generally comprise a communication interface, one or more processors, memory and one or more programs, wherein the one or more programs are stored in the memory and configured to be executed by the one or more processors, said programs including instructions for detecting contact with the touch sensitive display, in particular touch gestures of an operator of the automobile, and outputting an operation mode selection signal via the communication interface when said contact corresponds to a predefined touch gesture for selecting one of the said operation modes.

An operating device of this sort is disclosed in the US Patent Application Publication US2012/0041655A1, wherein it is disclosed that a vector defined by two coordinates resulting from a digital pressure applied by an operator of an automobile is compared to predetermined requirements on the length and orientation of the vector for validating a desired command for selecting an operating mode of the an automobile. In the Japanese Patent publication, JP 2003 139229 A, a touch screen for selecting operating states of a vehicle is disclosed, wherein the alignment of a touch gesture with a selection field is determined A further operating device comprising a touch screen is known from DE 10 2013 221 895 A1.

In this context, the object of the invention is to suggest an operating device for changing transmission modes in an automobile that enables simple and error free operation.

The object of the invention is achieved with the subject matter of independent claim 1. The dependent claims describe preferred embodiments of the invention.

The object of the invention, then, is achieved with an operating device for a shift by wire assembly in an automobile comprising a touch sensitive display for selecting an operation mode of an automatic and/or automatized transmission of the automobile, wherein the touch sensitive display is configured to detect a touch gesture of an operator corresponding to the selection of the operation mode in a selection operating state of the touch sensitive display, wherein in a preselection operating state of the touch sensitive display, the touch sensitive display is configured to detect a touch gesture of an operator for initializing the selection operating state. The operating device is generally by default in the preselection operating state. The operator is therefore required to perform a touch gesture in order to initialize the selection operating state, which enables the selection of an operation mode of the automobile. This preliminary touch gesture increases the safety and security of the operation of the automobile since the likelihood of making an inadvertent selection of an operation mode is essentially eliminated.

The requirements on the touch gesture for initializing the selection operating state of the operating device can be set according to predetermined safety standards and/or according to operator preference. The probability that an inadvertent operation mode selection will be made can be decreased by setting stricter requirements for the touch gesture for initializing the selection operating state.

The touch sensitive display could, for example, be an organic light emitting diode display with an integrated touch sensor system, molded together through a process involving film-insert-molded electronics for example. Alternatively, the touch sensitive display can comprise a rear projection polycarbonate film with an integrated and/or attached touch sensor system. The touch sensitive display can also be, for example, a liquid crystal display or thin film transistor display having integrated touch sensors.

A successful initialization of an operation mode can be displayed visually by the touch sensitive display in an information area designated for providing optical feedback for an operator.

In an embodiment of the operating device the touch sensitive display comprises a haptic feedback element that serves to provide a haptic feedback to the operator of the automobile while the operator is performing the touch gesture for initializing the selection operating state of the operating device, wherein said haptic feedback indicates that the touch gesture for initializing the selection operating state is detected by the touch sensitive display.

The haptic feedback can be output to the operator in order to signal a successful initialization of the selection operating state or in order to signal to the operator that the touch gesture may be concluded in order to successfully initialize the selection operating state. For example, a hand rest can be provided for the touch sensitive display for supporting the hand of the operator, said hand rest serving to give haptic feedback to the operator. For example, the hand rest can comprise a vibration generator and/or heater or other means in order to give a tactile feedback signal to the operator indicating a successful and/or incomplete and/or unsuccessful initialization of the selection operating state. The hand rest could be embodied to take on a certain form, texture or level of hardness or pliability or any other tactile response in order to signal the operator. An auditory feedback signal indicating a successful and/or incomplete and /or unsuccessful initialization of the selection operating state can be output to the operator over a speaker of the automobile. In order to achieve this, the communication interface of the operating device can be used to transmit a signal to a processor and/or controller for controlling the speaker.

A tactile and/or haptic feedback signal can also be output by piezo actuators, for example, or even by the surface to the touch sensitive display itself. In order to realize a haptic feedback from the surface the touch sensitive display, technologies such as those being developed by companies specializing in haptic feedback technologies, such as the company Senseg, Fujitsu, or Immersion in the year 2015, for example, can be incorporated into the touch sensitive display. These technologies can be based, for example, on the manipulation of electrostatic forces between the surface of the touch sensitive display and an operator's finger by employing an electrostatic layer. Alternatively such technologies can involve the manipulation of ultrasonic vibrations on the surface of the screen, for example, in order to generate the haptic feedback.

In an embodiment of the operating device a touch sensitive surface of the touch sensitive display comprises a preselection area, and in that the touch sensitive display detects the touch gesture for initializing the selection operating state when a pressure on the surface of the display is detected, a movement of the pressure along the surface of the display is detected and at least a portion of the movement is detected within the preselection area. The operator therefore slides a finger for example, along the surface of the touch sensitive display until the preselection area has been reached. When the preselection area has been entered, the operating device can initialize the selection operating state immediately by executing programs to detect touch gestures for selecting operation modes, or preferably, the operating device is configured to initialized the selection operating state when the operators finger stops at a position within the preselection area, i.e. when the touch sensitive display detects that the point of pressure on the display is stationary. The inadvertent selection of a transmission mode through accidental contact with the touch sensitive display can therefore be prevented.

In an embodiment of the operating device a touch sensitive surface of the touch sensitive display comprises a preselection area and a haptic feedback element is provided that serves to provide a haptic feedback to the operator of the automobile when a movement of a detected pressure on the surface of the display is detected within the preselection area. That is, when the pressure applied by the operator to the surface of the display is detected within the preselection area, the haptic feedback element signals the operator that the preselection area has been reached. This permits the operator to use the operating device, in particular to initialize the selection operating state, without needing to visually confirm that his or her finger, for example, has reached the preselection area. This increases the safety of the automobile by reducing the visual distraction that could be potentially caused by the touch sensitive display.

In an embodiment of the operating device the second operating state of the operating device is initialized when the movement of the detected pressure on the surface of the touch sensitive display falls below a predetermined velocity threshold and/or stops and/or when the detected pressure on the surface of the display exceeds or falls below a predetermined pressure threshold. That is, when the movement of the pressure detected stops and a stationary pressure is detected by the touch sensitive display, then the touch sensitive display initializes the selection operating state. Alternatively, the touch sensitive display can be configured to detect an increase in the pressure applied by the operator, and execute programs to initialize the selection operating state.

In an embodiment of the operating device the haptic guide element comprises an electrostatic layer of the touch sensitive display for inducing tactile response on the surface of the touch sensitive display. Electrostatic layers of this sort have been developed by companies, such as the company Senseg for example, for giving haptic feedback to touchscreen users. A haptic guide element comprising a layer of this sort could be used to provide the touch sensitive display with texture variations to delineate the preselection area for example. Generally, the electrostatic layer serves to increase or decrease a coefficient of friction between an operator's finger and the touch sensitive display, or even vary the amount of friction according to a particular predetermined pattern as the finger moves across the surface of the touch sensitive display.

In the operating device according to the invention the touch sensitive display is configured to display an image of a shift pattern comprising at least one selection path corresponding to a touch gesture for selecting an operation mode of the automobile when initializing the selection operating state.

In the operating device according to the invention the touch sensitive display is configured to display the shift pattern such that a start position of the at least one selection path is displayed at a location on the surface of the display at which a detected pressure is detected.

In an embodiment of the operating device the preselection area of the touch sensitive display is arranged such that the touch sensitive display can fully display the shift pattern when the selection operating state is initialized and/or such that a surface area sufficient for a touch gesture of an operator corresponding to the selection of the operation mode to be carried out is provided when the selection operating state is initialized. Traditional concepts for selecting operation modes of an automobile via a touch sensitive interface, wherein the operator selects the start position of the shift pattern, in particular by ending the touch gesture for initializing the selection operating state of the operating device, have been disadvantaged in that it was possible to select the start position near one of the edges of the touch sensitive display, such that a touch gesture for selecting and operation mode could only be partially carried out in the space available. This disadvantage can be overcome by arranging the preselection area such that the space provided for touch gesture for selecting an operation mode is always sufficient.

In an embodiment of the operating device the operating device is essentially a multimedia interface of the automobile. Since such interfaces are becoming standard in many automobiles, costs can be saved by integrating such an interface with an operating device, removing the necessity of producing and installing a second touch sensitive display.

Certain embodiments of the invention will next be explained in detail with reference to the following figures. They show:
Fig. 1: a schematic representation of an embodiment of the operating device;
Fig. 2: a schematic representation of an embodiment of the operating device; and
Fig. 3: a schematic representation of an alternative embodiment of the operating device;

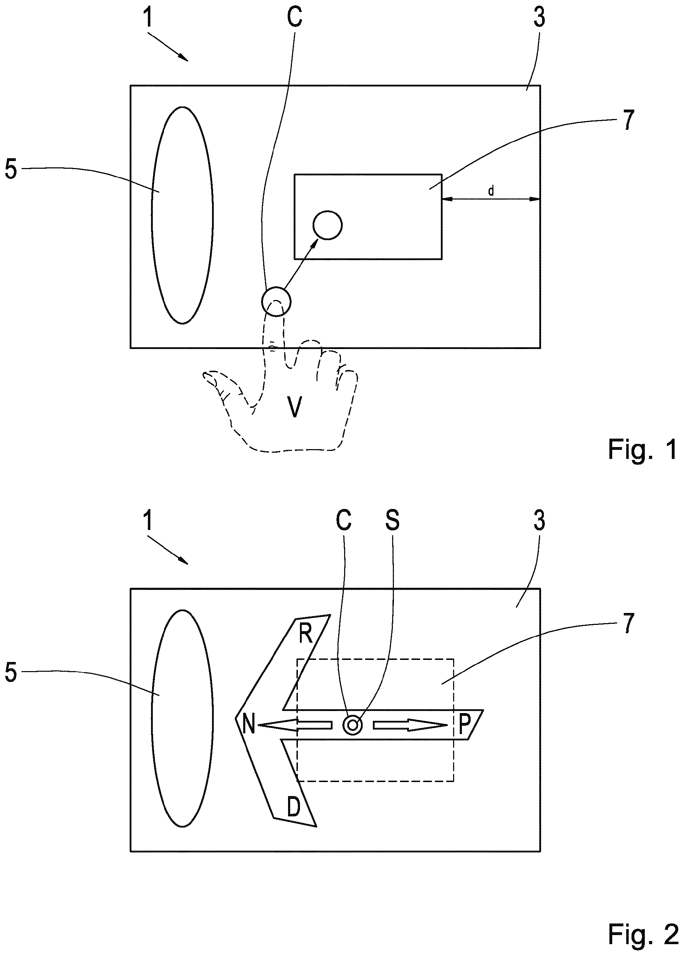

Fig. 1 shows a schematic representation of an embodiment of the operating device 1 with a touch sensitive display 3. The touch sensitive display 3 can be located in the middle console of an automobile, for example. The touch sensitive display comprises an information area 5 for displaying a currently selected operation mode (P, R, N, D) of the automobile. A preselection area 7 is shown. The preselection area 7 is embodied as a rectangular area, wherein the preselection area 7 is arranged such that a minimum distance d is provided between the edge of the preselection area 7 and the edge of the touch sensitive display 3. The minimum distance d is dimensioned such that a shift pattern 9 displayed by the touch sensitive display 3 in a selection operating state can be fully displayed.

In Fig. 1 the operating device is in a preselection operating state. In the preselection operating state in this embodiment of the invention the touch sensitive display is configured to detect a touch gesture of the operator (V) for initializing a selection operating state. The touch gesture comprises the application of a pressure C on the touch sensitive display, moving the pressure into the preselection area and then stopping while continuing to apply pressure. The operating device comprises a electrostatic layer (not shown) that can provide haptic feedback to the operator as the touch gesture for initializing the selection operating state is being carried out. In the embodiment shown in Fig. 1, the electrostatic layer interacts with a finger of the operator when the pressure being applied by the operator moves into the preselection area 7, increasing an attractive force between the finger of the operator and the touch sensitive display such that a coefficient of friction between the finger of the operator and the touch sensitive display increases, thereby signaling the operator that his or her finger has entered the preselection area, and that the touch gesture for initializing the selection operating state can be ended by stopping the movement of the pressure being applied.

Fig. 2 shows a schematic representation an embodiment of the operating device 1 wherein the operator V has performed a touch gesture for initializing the selection operating state OP2 as described in connection with Fig. 1. The touch sensitive display displays a shift pattern 9 for selecting operation modes P, R, N, D of the automobile, wherein a start position S of the shift pattern is displayed at the location of the detected pressure C applied by the finger of the operator V.

The pressure applied by the finger and the surface of the touch sensitive display 3 is detected by sensors. When the pressure C is detected within the preselection area 7, a program stored in the memory of the operating device 1 can issue instructions to the display 3 to display the shift pattern 9.

In the shift pattern 9 shown here selection paths comprise a transition area between a first segment between the start position S and an area for selecting a neutral i.e. "no gear" operation mode N and a additional segments between the area for selecting the neutral i.e. "no gear" operation mode N and areas for selecting reverse R and drive D operation modes. When the operator's V touch gesture moves into said transitional area, an operation mode N of the transmission of the automobile is selected in which an interruption in torque transmission occurs. Since the operation modes reverse and drive R, D of the transmission are selected via this transition area for the interruption of the torque transmission, i.e. via neutral, the risk of damage to the gear change mechanism due to an operator V error in operating the operation device is reduced regardless of an electronic safety circuit that may be additionally present.

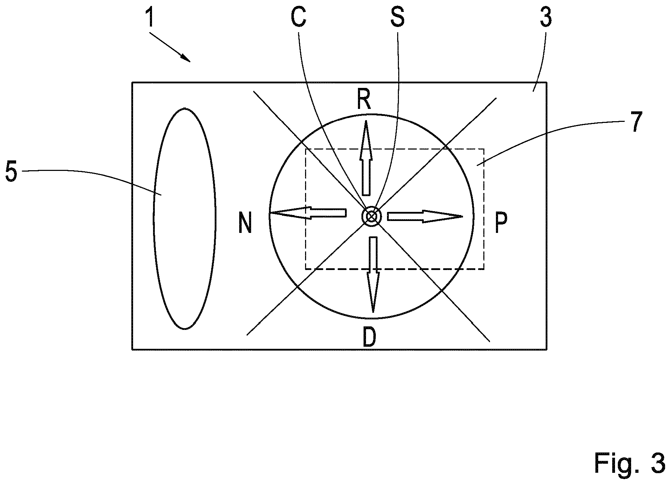

Fig. 3 show a schematic representation of an alternative embodiment of the operating device 1, in which an alternative shift pattern 9 is being displayed by the touch sensitive display 3. The start position S is, as shown in Fig. 2, located at the position of the contact, i.e. pressure C applied by the operator V. The shift pattern 9 comprises four quadrants for selecting operation modes P, R, N, D of the automobile. Directional arrows are provided, showing possible movements of the pressure C applied by the operator V for selecting the various operation modes P, R, N, D.

### Reference Characters

- 1: operating device
- 3: touch sensitive display
- 5: information area
- 7: preselection area
- 9: shift pattern
- C: pressure
- OP1: first segment of selection path
- OP2: second segment of selection path
- S: start position
- P, R, N, D: operation modes park, reverse, neutral, drive
- V: operator

## Claims

1. Operating device (1) for a shift by wire assembly in an automobile comprising a touch sensitive display (3) for selecting an operation mode (R, N, D, B) of an automatic and/or automatized transmission of the automobile, wherein the touch sensitive display is configured to detect a touch gesture of an operator (V) corresponding to the selection of the operation mode (R, N, D, B) in a selection operating state (OP2) of the touch sensitive display, wherein in a preselection operating state (OP1) of the touch sensitive display, the touch sensitive display (3) is configured to detect a touch gesture of an operator (V) for initializing the selection operating state, **characterized in that** the touch sensitive display (3) is configured to display an image of a shift pattern (9) comprising at least one selection path corresponding to a touch gesture for selecting an operation mode (P, R, N, D) of the automobile when initializing the selection operating state (S2), and
**in that** the touch sensitive display (3) is configured to display the shift pattern (9) such that a start position (S) of the at least one selection path is displayed at a location on the surface of the display (3) at which a detected pressure (C) is detected.

2. Operating device according to claim 1, **characterized in that** the touch sensitive display (3) comprises a haptic feedback element that serves to provide a haptic feedback to the operator (V) of the automobile while the operator (V) is performing the touch gesture for initializing the selection operating state (OP2) of the operating device (1), wherein said haptic feedback indicates that the touch gesture for initializing the selection operating state (OP2) is detected by the touch sensitive display (3).

3. Operating device (1) according to claim 1 or 2, **characterized in that** a touch sensitive surface of the touch sensitive display (3) comprises a preselection area (7), and **in that** the touch sensitive display (3) detects the touch gesture for initializing the selection operating state (OP2) when a pressure (C) on the surface of the display (3) is detected, a movement of the pressure (C) along the surface of the display (3) is detected and at least a portion of the movement is detected within the preselection area (7).

4. Operating device (1) according to at least one of the previous claims, **characterized in that** a touch sensitive surface of the touch sensitive display (3) comprises a preselection area (7), and **in that** a haptic feedback element is provided that serves to provide a haptic feedback to the operator (V) of the automobile when a movement of a detected pressure (C) on the surface of the display is detected within the preselection area (7).

5. Operating device (1) according to at least one of the claims 3 to 4, **characterized in that** the selection operating state (OP2) of the operating device (1) is initialized when the movement of the detected pressure (C) on the surface of the touch sensitive display (3) falls below a predetermined velocity threshold and/or stops and/or when the detected pressure (C) on the surface of the display exceeds or falls below a predetermined pressure threshold.

6. Operating device (1) according to at least one of the claims 2 to 5, **characterized in that** the haptic feedback element comprises an electrostatic layer of the touch sensitive display (3) for inducing tactile response on the surface of the touch sensitive display (3).

7. Operating device (1) according to at least one of the claims 3 to 6, **characterized in that** the preselection area (7) of the touch sensitive display (3) is arranged such that the touch sensitive display (3) can fully display the shift pattern (9) when the selection operating state (OP2) is initialized and/or such that a surface area sufficient for a touch gesture of an operator (V) corresponding to the selection of the operation mode (P, R, N, D) to be carried out is provided when the selection operating state (OP2) is initialized.

8. Operating device (1) according to at least one of the previous claims, **characterized in that** the operating device (1) is essentially a multimedia interface of the automobile.

## Patentansprüche

1. Betätigungsvorrichtung (1) für eine Shift-by-Wire-Anordnung in einem Kraftfahrzeug, umfassend eine berührungsempfindliche Anzeige (3) zum Auswählen eines Betriebsmodus (R, N, D, B) eines Automatik- und/oder automatisierten Getriebes des Kraftfahrzeugs, wobei die berührungsempfindliche Anzeige konfiguriert ist, eine Berührungsgeste eines Bedieners (V), die der Auswahl des Betriebsmodus (R, N, D, B) entspricht, in einem Auswahlbetriebszustand (OP2) der berührungsempfindlichen Anzeige zu detektieren, wobei in einem Vorauswahlbetriebszustand (OP1) der berührungsempfindlichen Anzeige die berührungsempfindliche Anzeige (3) konfiguriert ist, eine Berührungsgeste eines Bedieners (V) zum Initialisieren des Auswahlbetriebszustands zu detektieren, **dadurch gekennzeichnet, dass** die berührungsempfindliche Anzeige (3) konfiguriert ist, ein Bild eines Schaltschemas (9) anzuzeigen, das mindestens einen Auswahlpfad umfasst, der einer Berührungsgeste zum Auswählen eines Betriebsmodus (P, R, N, D) des Kraftfahrzeugs entspricht, wenn der Auswahlbetriebszustand (S2) initialisiert wird, und dadurch, dass die berührungsempfindliche Anzeige (3) konfiguriert ist, das Schaltschema (9) derart anzuzeigen, dass eine Startposition (S) des mindestens einen Auswahlpfads an einer Stelle auf der Oberfläche der Anzeige (3) angezeigt wird, an der ein detektierter Druck (C) detektiert wird.

2. Betätigungsvorrichtung nach Anspruch 1, **dadurch gekennzeichnet, dass** die berührungsempfindliche Anzeige (3) ein haptisches Rückkopplungselement umfasst, das dazu dient, dem Bediener (V) des Kraftfahrzeugs eine haptische Rückkopplung bereitzustellen, während der Bediener (V) die Berührungsgeste zum Initialisieren des Auswahlbetriebszustands (OP2) der Betätigungsvorrichtung (1) durchführt, wobei die haptische Rückkopplung anzeigt, dass die Berührungsgeste zum Initialisieren des Auswahlbetriebszustands (OP2) durch die berührungsempfindliche Anzeige (3) detektiert wird.

3. Betätigungsvorrichtung (1) nach Anspruch 1 oder 2, **dadurch gekennzeichnet, dass** eine berührungsempfindliche Oberfläche der berührungsempfindlichen Anzeige (3) einen Vorauswahlbereich (7) umfasst, und dadurch, dass die berührungsempfindliche Anzeige (3) die Berührungsgeste zum Initialisieren des Auswahlbetriebszustands (OP2) detektiert, wenn ein Druck (C) auf der Oberfläche der Anzeige (3) detektiert wird, eine Bewegung des Drucks (C) entlang der Oberfläche der Anzeige (3) detektiert wird und zumindest ein Teil der Bewegung in dem Vorauswahlbereich (7) detektiert wird.

4. Betätigungsvorrichtung (1) nach mindestens einem der vorhergehenden Ansprüche, **dadurch gekennzeichnet, dass** eine berührungsempfindliche Oberfläche der berührungsempfindlichen Anzeige (3) einen Vorauswahlbereich (7) umfasst, und dadurch, dass ein haptisches Rückkopplungselement bereitgestellt ist, das dazu dient, dem Bediener (V) des Kraftfahrzeugs eine haptische Rückkopplung bereitzustellen, wenn eine Bewegung eines detektierten Drucks (C) auf der Oberfläche der Anzeige in dem Vorauswahlbereich (7) detektiert wird.

5. Betätigungsvorrichtung (1) nach mindestens einem der Ansprüche 3 bis 4, **dadurch gekennzeichnet, dass** der Auswahlbetriebszustand (OP2) der Betätigungsvorrichtung (1) initialisiert wird, wenn die Bewegung des detektierten Drucks (C) auf der Oberfläche der berührungsempfindlichen Anzeige (3) unter einen vorbestimmten Geschwindigkeitsschwellenwert fällt und/oder anhält und/oder wenn der detektierte Druck (C) auf der Oberfläche der Anzeige einen vorbestimmten Druckschwellenwert übersteigt oder darunter fällt.

6. Betätigungsvorrichtung (1) nach mindestens einem der Ansprüche 2 bis 5, **dadurch gekennzeichnet, dass** das haptische Rückkopplungselement eine elektrostatische Schicht der berührungsempfindlichen Anzeige (3) zum Induzieren einer taktilen Rückmeldung auf der Oberfläche der berührungsempfindlichen Anzeige (3) umfasst.

7. Betätigungsvorrichtung (1) nach mindestens einem der Ansprüche 3 bis 6, **dadurch gekennzeichnet, dass** der Vorauswahlbereich (7) der berührungsempfindlichen Anzeige (3) derart angeordnet ist, dass die berührungsempfindliche Anzeige (3) das Schaltschema (9) vollständig anzeigen kann, wenn der Auswahlbetriebszustand (OP2) initialisiert ist, und/oder derart, dass ein Oberflächenbereich, der für eine Berührungsgeste eines Bedieners (V) ausreicht, die der Auswahl des auszuführenden Betriebsmodus (P, R, N, D) entspricht, bereitgestellt ist, wenn der Auswahlbetriebszustand (OP2) initialisiert ist.

8. Betätigungsvorrichtung (1) nach mindestens einem der vorhergehenden Ansprüche, **dadurch gekennzeichnet, dass** die Betätigungsvorrichtung (1) im Wesentlichen eine Multimedia-Schnittstelle des Kraftfahrzeugs ist.

## Revendications

1. Dispositif de commande (1) pour un ensemble de changement de vitesse à commande électrique « shift by wire » dans une automobile comprenant une unité d'affichage tactile (3) pour sélectionner un mode de fonctionnement (R, N, D, B) d'une transmission automatique et/ou automatisée de l'automobile, dans lequel l'unité d'affichage tactile est configurée pour détecter un geste tactile d'un opérateur (V) correspondant à la sélection du mode de fonctionnement (R, N, D, B) dans un état de commande de sélection (OP2) de l'unité d'affichage tactile, dans lequel, dans un état de commande de pré-sélection (OP1) de l'unité d'affichage tactile, l'unité d'affichage tactile (3) est configurée pour détecter un geste tactile d'un opérateur (V) pour initialiser l'état de commande de sélection, **caractérisé en ce que** l'unité d'affichage tactile (3) est configurée pour afficher une image d'un schéma de changement de vitesse (9) comprenant au moins un chemin de sélection correspondant à un geste tactile pour sélectionner un mode de fonctionnement (P, R, N, D) de l'automobile lors de l'initialisation de l'état de commande de sélection (S2), et
**en ce que** l'unité d'affichage tactile (3) est configurée pour afficher le schéma de changement de vitesse (9) de telle sorte qu'une position de commencement (S) de l'au moins un chemin de sélection soit affichée à un emplacement sur la surface de l'unité d'affichage (3) auquel une pression détectée (C) est détectée.

2. Dispositif de commande selon la revendication 1, **caractérisé en ce que** l'unité d'affichage tactile (3) comprend un élément de rétroaction haptique qui sert à fournir une rétroaction haptique à l'opérateur (V) de l'automobile alors que l'opérateur (V) est en train de réaliser le geste tactile pour initialiser l'état de commande de sélection (OP2) du dispositif de commande (1), dans lequel ladite rétroaction haptique indique que le geste tactile pour initialiser l'état de commande de sélection (OP2) est détecté par l'unité d'affichage tactile (3).

3. Dispositif de commande (1) selon la revendication 1 ou 2, **caractérisé en ce qu'**une surface tactile de l'unité d'affichage tactile (3) comprend une zone de pré-sélection (7), et **en ce que** l'unité d'affichage tactile (3) détecte le geste tactile pour initialiser l'état de commande de sélection (OP2) lorsqu'une pression (C) sur la surface de l'unité d'affichage (3) est détectée, un mouvement de la pression (C) le long de la surface de l'unité d'affichage (3) est détecté et au moins une partie du mouvement est détectée à l'intérieur de la zone de pré-sélection (7).

4. Dispositif de commande (1) selon au moins l'une des revendications précédentes, **caractérisé en ce qu'**une surface tactile de l'unité d'affichage tactile (3) comprend une zone de pré-sélection (7), et **en ce qu'**un élément de rétroaction haptique est prévu qui sert à fournir une rétroaction haptique à l'opérateur (V) de l'automobile lorsqu'un mouvement d'une pression détectée (C) sur la surface de l'unité d'affichage est détecté à l'intérieur de la zone de pré-sélection (7).

5. Dispositif de commande (1) selon au moins l'une des revendications 3 à 4, **caractérisé en ce que** l'état de commande de sélection (OP2) du dispositif de commande (1) est initialisé lorsque le mouvement de la pression détectée (C) sur la surface de l'unité d'affichage tactile (3) est inférieur à un seuil de vitesse prédéterminé et/ou s'arrête et/ou lorsque la pression détectée (C) sur la surface de l'unité d'affichage dépasse, ou est inférieure à, un seuil de pression prédéterminé.

6. Dispositif de commande (1) selon au moins l'une des revendications 2 à 5, **caractérisé en ce que** l'élément de rétroaction haptique comprend une couche électrostatique de l'unité d'affichage tactile (3) pour entraîner une réponse tactile sur la surface de l'unité d'affichage tactile (3).

7. Dispositif de commande (1) selon au moins l'une des revendications 3 à 6, **caractérisé en ce que** la zone de pré-sélection (7) de l'unité d'affichage tactile (3) est agencée de telle sorte que l'unité d'affichage tactile (3) puisse entièrement afficher le schéma de changement de vitesse (9) lorsque l'état de commande de sélection (OP2) est initialisé et/ou de telle sorte qu'une superficie suffisante pour un geste tactile d'un opérateur (V), correspondant à la sélection du mode de fonctionnement (P, R, N, D) destiné à être réalisé, soit fournie lorsque l'état de commande de sélection (OP2) est initialisé.

8. Dispositif de commande (1) selon au moins l'une des revendications précédentes, **caractérisé en ce que** le dispositif de commande (1) est essentiellement une interface multimédia de l'automobile.
